Europäisches Patentamt

European Patent Office

Office européen des brevets

(19)

(11) Numéro de publication: **0 238 768**
**B1**

(12) **FASCICULE DE BREVET EUROPEEN**

(45) Date de publication du fascicule du brevet:
09.05.90

(51) Int. Cl.⁵: **B62K 21/02**, B62K 25/04,
B62K 25/16

(21) Numéro de dépôt: 86402921.0

(22) Date de dépôt: 23.12.86

(54) **Dispositif de suspension et de roulement associé à une roue avant de motocycle.**

(30) Priorité: 27.12.85 FR 8519306
21.02.86 FR 8602394

(43) Date de publication de la demande:
30.09.87 Bulletin 87/40

(45) Mention de la délivrance du brevet:
09.05.90 Bulletin 90/19

(84) Etats contractants désignés:
AT BE CH DE GB IT LI LU NL SE

(56) Documents cités:
FR-A- 2 380 181
FR-A- 2 418 141
US-A- 4 179 135
US-A- 4 526 249

(73) Titulaire: ELF FRANCE, Société Anonyme dite:, Tour
Elf 2 place de la Coupole La Défense 6,
F-92400 Courbevoie(FR)

(72) Inventeur: Trema, Daniel, 31 rue du 15 Février,
F-95870 Bezons(FR)

(74) Mandataire: Hirsch, Marc-Roger, Cabinet Hirsch 34 rue
de Bassano, F-75008 Paris(FR)

**Description**

La présente invention s'applique à un dispositif à bras unilatéral de suspension avant, de support et de direction d'une roue avant de motocycle, ledit bras étant susceptible de tourner autour d'un axe de direction ou de pivotement sensiblement orthogonal à celui de ladite roue et situé sensiblement dans le plan longitudinal médian du motocycle, et comportant d'une part une partie coudée en forme de C qui enveloppe une partie de la section transversale de la périphérie de la roue, et d'autre part, une partie basse portant l'axe de la roue et qui est munie d'une pièce d'articulation à rotule dont le centre de pivotement est situé sensiblement dans l'alignement de l'axe de direction et qui coopère avec une pièce conjuguée d'articulation de rotule montée à l'extrémité d'un bras de liaison lui-même monté à rotation sur un axe du châssis du motocycle, perpendiculairement au plan médian du motocycle pour assurer le guidage latéral dudit bras unilatéral.

La suspension d'une caisse ou d'un châssis de véhicule sur une roue directrice doit, pour conserver une tenue de route correcte à ce véhicule, être indépendante de celle des autres roues mais cette exigence a pour conséquence que les liaisons entre la roue et les moyens de suspension sont alors beaucoup plus complexes. Une simplification importante a été apportée aux suspensions coopérant avec les roues avant de véhicule automobile par le type de suspension dénommée depuis «suspension Mac Pherson» et décrite par exemple dans le brevet français 1 156 145. Dans ce type de suspension perfectionné depuis, la fusée de la roue avant est portée par un tube d'amortisseur relié par une biellette articulée à la partie centrale du châssis et la caisse du véhicule vient reposer, à partir d'une position d'appui relativement haute, directement sur un ressort hélicoïdal interposé entre un épaulement d'appui du tube d'amortisseur et une plaque d'appui de la caisse.

Cette solution de suspension avant qui s'est révélée depuis si compacte et si économique qu'une partie importante des voitures automobiles construites dans le monde l'utilise, n'a cependant jamais trouvé d'application aux motocycles qui nécessitent un appui de roue avant qui soit bien centré dans le plan de symétrie de la roue alors que les voitures à quatre roues peuvent supporter aisément un montage en porte-à-faux de la fusée de roue.

On connaît, de US-A 4 526 249 un dispositif à bras unilatéral de suspension avant, de support et de direction d'une roue avant de motocycle, ledit bras étant susceptible de tourner autour d'un axe de direction sensiblement orthogonal à celui de ladite roue et situé sensiblement dans le plan longitudinal médian du motocycle, dans lequel le bras comporte d'une part une partie coudée en forme de C qui enveloppe une partie de la section transversale de la périphérie de la roue, et d'autre part, une partie basse portant l'axe de la roue et qui est munie d'une pièce d'articulation à rotule dont le centre de pivotement est situé sensiblement dans l'alignement de l'axe de direction et qui coopère avec une pièce conjuguée d'articulation de rotule monté à l'extrémité d'un bras de liaison, lui-même monté à rotation sur un axe du châssis du motocycle perpendiculairement au plan médian du motocycle pour assurer le guidage latéral dudit bras unilatéral, conformément au préambule de la revendication 1.

Le train avant de motocycle selon le document US-A 4 179 135 comporte une fourche de roue avant dont l'axe de rotation est défini par un axe de fourche à bossage, monté rotatif à l'intérieur d'une tête de direction ou de fourche qui est reliée à un guidon par l'intermédiaire d'une tige coulissant dans un alésage de la tête, tandis qu'un ressort de suspension est interposé entre un épaulement de la tige et la tête. Au cours de la rotation de la roue avant, la tige ne tourne pas dans l'alésage et ne produit pas un effet d'amortissement de la rotation (d'orientation) de la roue directrice.

L'un des buts de la présente invention est de faire bénéficier les motocycles et véhicules similaires de certains des avantages de la suspension du type «Mac Pherson» afin de réaliser une suspension avant de motocycle qui soit plus compacte, plus efficace, plus économique et qui, d'une façon générale, permette une meilleure intégration des exigences de tenue de route et d'esthétique dans la conception des motocycles et autres véhicules à deux ou trois roues et à roue directrice unique.

Dans les motocycles réalisés selon la présente demande de brevet, et essayés notamment en compétition, l'amortissement de la direction par suite de la rotation relative du piston d'amortissement par rapport au corps d'amortisseur, s'est révélé de façon surprenante et imprévisible pour l'homme de l'art, comme un élément important de la stabilité de la direction du motocycle. Cet amortissement est, de plus, avantageusement combiné à une disposition plus favorable du ressort de suspension et du bras de liaison bas qui absorbe de façon particulièrement efficace les sollicitations dirigées selon la longueur du motocycle, du fait de sa position plus basse qu'une fourche et que les bras de liaison de motocycle connus jusqu'à maintenant.

A cet effet, le bras unilatéral est relié à son extrémité supérieure à un corps de bloc de suspension et d'amortissement à cylindre télescopique dont la tige de piston mobile extérieure, d'une part s'articule par son extrémité sur un bec avant du châssis du motocycle, et d'autre part présente un axe géométrique qui se confond sensiblement avec l'axe de pivotement du bras, de telle manière que ledit bras unilatéral portant la roue avant soit relié au châssis du motocycle uniquement par la tige de piston et par le bras de liaison bas qui constituent une liaison triangulée de suspension intégrant ledit bras latéral dans le côté du triangle dont la longueur varie en fonction de la charge appliquée à la suspension et que la rotation de direction du bras unilatéral sous l'action d'un organe de commande de direction provoque une rotation du corps du bloc de suspension et d'amortissement par rapport à ladite tige de piston et au piston d'amortisseur auquel elle est reliée et, par voie de conséquence, un amortissement de rotation de la direction du motocycle.

Selon un premier mode de réalisation de l'invention, la partie coudée en C du bras unilatéral est reliée par une articulation à rotule à une biellette de direction apte à orienter la roue par rotation du bras unilatéral et du bloc de suspension et d'amortissement dont la tige mobile est solidaire en rotation du bec avant du châssis auquel elle transmet le couple rotatif de frottement exercé sur le piston d'amortisseur par le corps dudit bloc de suspension et d'amortissement.

Selon un autre mode de réalisation de la commande de direction associée, l'axe de rotation de la biellette de direction est disposé sensiblement au centre de courbure du chemin géométrique parcouru par le centre de la rotule de direction au cours du débattement du bloc de suspension et d'amortissement. La tige de piston mobile du bloc télescopique est en appui axial sur le bec avant du châssis du motocycle qu'elle traverse librement à rotation tandis qu'elle est mobile axialement à l'intérieur du bloc télescopique dont elle est rendue solidaire en rotation et la partie de ladite tige mobile qui dépasse au-dessus du bec avant est rendue solidaire d'un guidon à deux poignées, de commande directe de l'orientation de la roue avant.

Selon encore un autre mode de réalisation le bras unilatéral comporte au voisinage de l'axe de la roue un prolongement dirigé vers la jante de la roue et vers le bloc télescopique et sur lequel est fixé, par des moyens appropriés tels que des vis, au moins un étrier de frein à disque entourant un disque de frein rendu solidaire au moins en rotation de l'axe tournant de la roue.

Selon encore un autre mode de réalisation, l'axe de la roue est monté rotatif à l'intérieur du bras unilatéral par l'intermédiaire d'au moins un roulement immobilisé axialement par des moyens d'arrêt dans un alésage du bras unilatéral et fait saillie du côté opposé au bras unilatéral par une partie de fixation de forme cannelée ou équivalente, apte à être rendue solidaires en rotation de façon amovible du disque de frein et du voile de la roue avant, cette partie de fixation étant prolongée par une partie filetée de réception d'un écrou de serrage rapide de la roue et du disque de frein, de manière à permettre le changement rapide de la roue avant et, le cas échéant, du disque de frein après basculement du ou des étriers de frein.

Selon une disposition de l'invention assurant un meilleur guidage, le support d'articulation à rotule qui coopère avec le bras de liaison est constitué par une tige qui est solidaire du bras unilatéral et qui fait saillie en direction du chemin de roulement de la roue avant et dont l'axe est situé sensiblement dans le plan médian de la roue avant, une bague ou un noyau de rotule étant disposé sur cette tige et articulé sur l'extrémité conjuguée du bras de liaison et au moins la tige et une partie de la bague ou du noyau de rotule et de l'extrémité conjuguée du bras de liaison sont logés à l'intérieur de la cloche du disque de frein.

Selon un autre mode de réalisation avantageux, la tige mobile extérieure du cylindre télescopique est articulée sur le bec avant du châssis du motocycle par l'intermédiaire d'une tige dont l'axe est orthogonal au plan médian du motocycle, qui est solidaire du bec avant et qui traverse à rotation un alésage d'une tête d'articulation reliée, le cas échéant de façon réglable, à la tige mobile.

Selon encore une autre variante de réalisation de l'invention, la pièce conjuguée d'articulation de rotule est montée de façon réglable à l'extrémité du bras de liaison de manière à permettre le réglage de l'angle de chasse de la roue avant du motocycle. La liaison réglable entre l'extrémité du bras de liaison et la pièce conjuguée d'articulation de rotule peut être une liaison coulissante ou mobile contrôlée par un vérin de manoeuvre asservi à la vitesse du motocycle, de manière à faire varier l'angle de chasse de la roue avant en fonction de la vitesse du motocycle.

Selon un autre mode de réalisation, le bloc de suspension et d'amortissement comporte un ressort hélicoïdal de forme générale cylindrique ou tronconique et dont l'axe longitudinal, tout en étant situé sensiblement dans le plan médian du motocycle, est excentré par rapport à l'axe du cylindre télescopique, par suite de l'excentration par rapport audit axe d'au moins l'une des coupelles ou plaques de réception de l'extrémité de ce ressort, de manière à provoquer sur le bras unilatéral un couple de rappel vers la position en ligne droite. Ces suspensions de motocycle du type Mac Pherson présentent une difficulté pour assurer la liaison entre le guidon de commande de la direction et le bras de support unique de la roue avant.

Pour assurer la liaison entre le bras support unique et le guidon, on a proposé d'utiliser une transmission à cardan par biellettes qui s'est révélée relativement onéreuse et compliquée à construire, tout en transmettant néanmoins des réactions brutales au guidon au cours du débattement de la suspension. Une autre solution consiste à relier au moins en translation l'extrémité de la tige mobile au guidon et à relier en rotation par une liaison glissante cette tige au corps du bloc télescopique de suspension, ce corps étant fixé rigidement au bras unique de suspension. Cette solution séduisante en pratique s'avère très difficile à réaliser car il n'existe pas de bloc télescopique de suspension et d'amortissement dont la tige est reliée en rotation au corps du bloc, une telle disposition exigeant qu'un manchon solidaire de la tige entoure le corps du bloc et lui soit relié en rotation par des cannelures, afin de ne pas perturber les étanchéités hydrauliques de l'amortisseur.

La présente invention a également pour but de proposer un dispositif à bras unilatéral de suspension et une commande de direction adaptée à cette suspension du type Mac Pherson et qui soit de conception simple, ne transmette pas de réactions parasites au guidon tout en permettant d'utiliser pour le bloc de suspension et d'amortissement des éléments du commerce dont la fiabilité et l'économie d'emploi et d'usage sont bien établies.

A cet effet, le ressort du bloc de suspension et/ou d'amortissement est un ressort hélicoïdal dont au moins l'un des plans d'appui des extrémités comporte une butée à faible frottement autorisant la libre rotation du ressort autour de son axe longitudinal au cours de son débattement et la commande de direction est constituée d'un guidon ou volant monté rotatif sur un axe vertical dudit bec et articulé à rotation autour d'un axe sensiblement perpendiculaire au plan médian de la roue avant, c'est-à-dire au plan de direction, à l'extrémité supérieure d'au moins une biellette haute inclinée vers l'avant du motocycle à partir de son extrémité supérieure et dont l'extrémité inférieure est également articulée à rotation au bras unilatéral ou bras support autour d'un axe sensiblement perpendiculaire audit plan de direction à l'extrémité supérieure d'au moins une biellette basse inclinée vers l'avant du motocycle à partir de son extrémité inférieure qui est reliée à rotation autour d'un axe sensiblement perpendiculaire audit plan de direction, de manière que les biellettes haute et basse reliées en rotation respectivement au guidon et au bras support s'articulent en ciseaux entre elles au cours du débattement de la suspension avant du motocycle.

Selon un autre mode de réalisation la liaison à rotation de l'extrémité supérieure de la biellette haute et celle de l'extrémité inférieure de la biellette basse sont situées au-delà des plans d'appui des extrémités du ressort hélicoïdal constituant le ressort de suspension du bloc de suspension.

Selon une forme d'exécution du dispositif à bras unilatéral de suspension avant, de support et de direction d'une roue, notamment d'une roue avant de motocycle portée par au moins un bras support relié à son extrémité supérieure à un bloc de suspension et/ou d'amortissement dont la tige mobile extérieure s'articule à son extrémité sur un bec avant du châssis du motocycle, ce dispositif comporte un guidon ou volant monté rotatif sur un axe vertical dudit bec et articulé à rotation autour d'un axe sensiblement perpendiculaire au plan médian de la roue avant, c'est-à-dire au plan de direction, à l'extrémité supérieure d'au moins une biellette haute inclinée vers l'avant du motocycle à partir de son extrémité supérieure et dont l'extrémité inférieure est également articulée à rotation autour d'un axe sensiblement perpendiculaire audit plan de direction, à l'extrémité supérieure d'au moins une biellette basse inclinée vers l'avant du motocycle à partir de son extrémité inférieure qui est reliée à rotation au bras support autour d'un axe sensiblement perpendiculaire audit plan de direction, de manière que les biellettes haute et basse reliées en rotation respectivement au guidon et au bras support s'articulent en ciseaux entre elles au cours du débattement de la suspension avant du motocycle, et la liaison à rotation de l'extrémité supérieure de la biellette haute et celle de l'extrémité inférieure de la biellette basse sont situées au-delà des plans d'appui des extrémités du ressort hélicoïdal constituant le ressort de suspension du bloc de suspension.

Selon le mode de réalisation le plus courant, la biellette haute et la biellette basse présentent sensiblement la même longueur et leurs lignes moyennes respectives forment, en position d'extension maximale du bloc de suspension, un angle d'environ 30° avec l'axe longitudinal de ce bloc de suspension.

La biellette haute et la biellette basse peuvent présenter des longueurs nettement différentes et leurs lignes moyennes respectives forment alors, en position d'extension maximale du bloc de suspension, un angle inférieur à 30° avec l'axe longitudinal de ce bloc de suspension. La biellette haute peut aussi présenter une longueur nettement inférieure à celle de la biellette basse de manière à éloigner de la roue avant l'axe d'articulation entre les deux biellettes. L'axe d'articulation de la biellette haute est de préférence sensiblement coaxial à l'axe d'articulation de la tige mobile extérieure du bloc de suspension et d'amortissement sur le bec avant du chassis du motocycle.

Selon un autre mode de réalisation très compact de l'invention, la biellette haute présente, à sa partie supérieure, une fourche à deux branches dont chacune est reliée à rotation à un bossage d'un bras du guidon et respectivement, à sa partie inférieure, un palier central unique qui est traversé par un boulon ou tige d'assemblage et est disposé entre deux paliers qui sont également traversés par le boulon d'assemblage et qui sont ménagés à chacune des extrémités des deux branches d'une fourche de la biellette basse qui se prolonge par deux branches inférieures reliées chacune à rotation à un bossage correspondant ménagé sur le bras support. Les biellettes haute et basse présentent la forme générale d'un trapèze dont la grande base est articulée respectivement au guidon et au bras support de roue avant et dont les petites bases sont accolées l'une à l'autre dans la zone traversée par le boulon d'assemblage et articulées entre elles.

Selon encore un autre mode de réalisation de l'invention, la liaison à rotation de l'extrémité supérieure de la bielle haute et celle de l'extrémité inférieure de la biellette basse sont situées au-delà des plans d'appui des extrémités d'un ressort hélicoïdal constituant le ressort de suspension du bloc de suspension. Les biellettes de direction constituent ainsi un moyen supplémentaire de guidage du bloc de suspension au cours de son débattement.

D'autres buts, avantages et caractéristiques apparaîtront à la lecture de la description d'un mode de réalisation de l'invention, faite à titre non limitatif et en regard du dessin annexé où:

- la figure 1 est une vue longitudinale schématique, avec arrachements d'extrémité, et carter, réservoir et selle enlevés, d'un motocycle équipé d'une suspension avant selon l'invention;
- la figure 2 est une vue en coupe selon la ligne II-II de la figure 1;
- la figure 3 est une vue longitudinale à plus petite échelle d'un motocycle correspondant sensiblement à celui de la figure 1 mais équipé d'un autre type de commande de direction;
- la figure 4 est une vue de côté du dispositif de suspension et de commande de direction selon l'invention représenté relié au bras support de roue dans ses deux positions extrêmes d'extension et de compression, la roue du motocycle étant pour la plus grande part arrachée pour diminuer l'encombrement du dessin;
- la figure 5 est une vue en coupe selon le plan II-II de la figure 4, représentant le dispositif de commande de direction vu vers l'avant selon un plan de coupe traversant l'articulation entre les deux biellettes et un autre plan de coupe traversant la roue transversalement via son axe et hors de l'étrier de frein à disque;
  - la figure 6 est une vue de côté, carénages enlevés, d'un motocycle utilisant un dispositif de suspension et de commande de direction selon l'invention mais légèrement modifié par rapport à celui des figures 4 et 5.

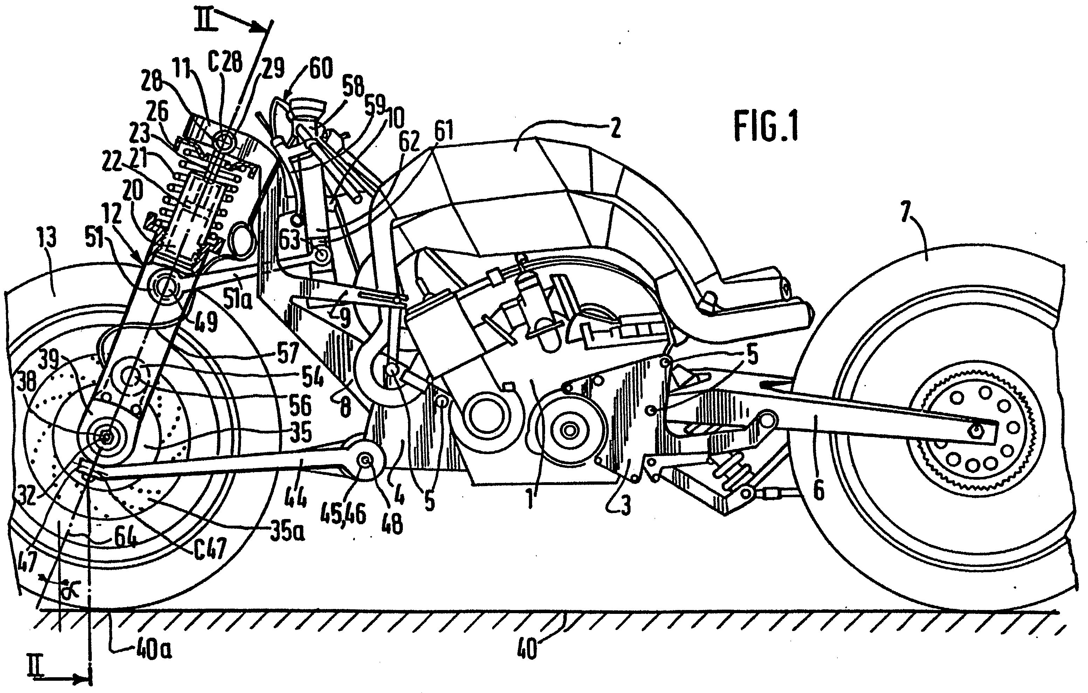

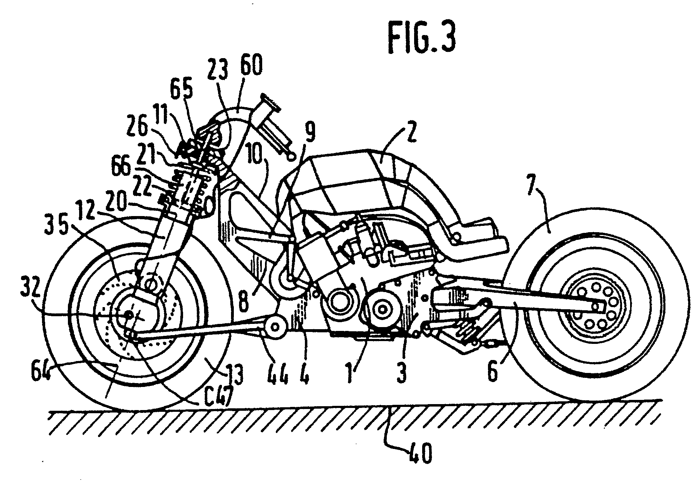

Le motocycle représenté à la figure 1 et sur la figure 3 à plus petite échelle est équipé de moyens communs à presque tous les motocycles et qui seront seulement mentionnés, tels que le bloc-moteur 1 avec son échappement 2 à la partie haute, le châssis constitué d'un support arrière 3 et d'un support avant 4 reliés par l'intermédiaire du bloc-moteur 1 sur lequel ils sont boulonnés par des vis 5. Un bras de suspension arrière 6 est articulé sur le support arrière 3 et porte la roue arrière 7. Le support avant 4 est prolongé vers l'avant par un berceau 8 qui est relié par des bras 9 et 10 au bloc-moteur 1 et qui se termine vers l'avant par un bec 11 destiné à reporter la charge avant du châssis sur la suspension avant du motocycle qui va maintenant être décrite.

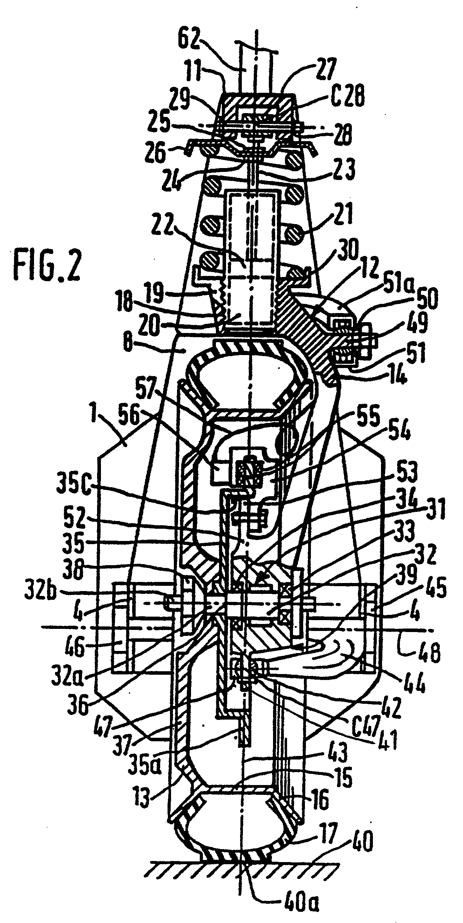

Le bras unique ou jambe de force 12 de support de la roue avant 13 est représenté en coupe à la figure 2 et en vue de côté à la figure 1. Il comporte une partie 14 coudée en forme de C et qui enveloppe la section de la roue 13 en se glissant en biais en-dessous du talon de jante 15, puis autour de l'un des bords en V 16 de la jante et enfin en entourant avec une faible garde l'extérieur du bandage pneumatique 17. Au-dessus du bandage pneumatique 17, la partie coudée 14 présente un alésage 18 qui reçoit rigidement et, de préférence de façon réglable, par tout moyen approprié, notamment comme représenté par un filetage serré par une bride fendue 19, un corps cylindrique 20 de bloc télescopique entouré par un ressort de suspension 21 et comportant un piston d'amortisseur hydraulique 22 dont la tige de piston 23 est reliée au bec 11 du châssis.

La tige de piston 23 est rendu solidaire de façon réglable, par exemple par un jeu de deux écrous de réglage 24 et 25, d'une plaque d'appui 26 du ressort hélicoïdal 21 et est vissée dans une tête d'articulation 27 qui présente un alésage traversé par une tige d'articulation 28 reliée au bec 11 du châssis. La tige 28 traverse par exemple deux alésages opposés ménagés dans des rebords du bec 11 où elle est maintenue en place par des rondelles élastiques de blocage 29 tandis que la tête d'articulation 27 peut tourner librement autour de la tige 28. Lorsque la longueur du ressort hélicoïdal de suspension 21 comprimé entre la plaque supérieure 26 et une coupelle d'appui inférieure 30 formée à l'extrémité supérieure de la partie coudée 14 varie, la tige 23 reste ainsi dans l'axe du corps cylindrique 20 sans subir de contraintes de flexion grâce à la rotation de la tête 27 par rapport à la tige 28 et/ou de cette tige 28 par rapport au bec 11.

La coupelle d'appui inférieure 30 peut être rendue solidaire du corps d'amortisseur 20, indépendamment du bras 12 et notamment de façon réglable, ce qui permet le cas échéant de modifier, de façon aisée, l'assiette du motocycle. Cette assiette peut être modifiée, dans le mode représenté sur la figure 2, par déplacement des écrous de réglage 24 et 25 ou par déplacement du corps 20 dans l'alésage 18 lorsque la coupelle 30 est fixée sur ce corps.

La liaison entre la tige 23 et le support 11 peut être réalisée de façon simple par une fixation semi-élastique à bloc élastomère antibruit qui ne donne pas la même perfection géométrique de guidage que la version représentée à la figure 2, mais qui suffit dans les applications courantes. Cette liaison à bloc élastomère peut s'orienter dans toutes les directions à condition de limiter le débattement d'inclinaison.

En variante, la coupelle 26 peut être rendue solidaire du support 11.

Le bras unique 12 présente à sa partie inférieure un alésage 31 qui reçoit l'axe 32 de la roue avant 13 et qui est guidé en rotation par de robustes paliers à billes ou à rouleaux 33 et 34 remplacés, le cas échéant, par un roulement unique adéquat, par exemple à contact oblique. Du côté de la roue 13, l'axe 32 se prolonge par une partie cannelée 32a sur laquelle viennent s'engager successivement le disque de frein 35 en butée sur un épaulement 36 de l'axe 32 et le flasque ou voile 37 de la roue 13 réalisée de préférence en alliage léger, le flasque 37 étant appliqué en butée sur le disque de frein 35 par un écrou de blocage 38 vissé sur l'extrémité filetée 32b de l'axe 32.

La partie d'axe ou partie basse 39 du bras unique 12 se prolonge en direction du chemin de roulement 40 du motocycle par une tige d'articulation 41 usinée dans la masse ou rapportée et sur laquelle est monté un anneau de rotule 42. L'axe de la tige 41 est sensiblement coaxial à l'axe de direction 64 du motocycle qui se confond avec celui de la tige 23 et se trouve toujours situé dans le plan médian 43 du motocycle. Un bras de guidage bas ou de liaison 44 (voir la figure 1), articulé en 45 et 46 à rotation sur le support avant 4 du bloc-moteur, est mobile en rotation autour d'un axe 48 sensiblement perpendiculaire au plan médian 43 du motocycle, confondu en ligne droite avec le plan médian de la roue avant 13, et est relié par une articulation de rotule femelle 47 à l'anneau de rotule 42 de telle façon que le centre de rotation 47 de la rotule femelle 47 soit situé sur l'axe de la tige 41 et donc dans le plan médian 43 du motocycle qui est également le plan de débattement en rotation de la rotule femelle au cours de la rotation du bras de guidage bas 44 lorsque celui-ci se débat autour de l'axe 48 de ses articulations 45 et 46.

Dans sa partie coudée 14 qui est la plus excentrée par rapport au plan médian 43 de la roue 13 et dans le mode de réalisation représenté, sensiblement au niveau de la partie haute du bandage pneumatique 17, est ménagée ou fixée une tige d'articulation 49 qui porte un anneau de rotule mâle 50 sur lequel vient se monter la partie de rotule femelle 51 d'une biellette de direction 51a. La commande de direction s'effectue par une tige de direction 61 sensiblement verticale et guidée dans un tube de direction 62 muni d'une fente latérale à travers laquelle pénètre l'extrémité de la biellette 51a qui est articulée latéralement sur la tige 61 par un axe latéral 63.

Les diverses articulations à rotule qui viennent d'être citées, notamment l'articulation à rotule 42, 47, peuvent être réalisées plus simplement, mais de façon plus onéreuse, en utilisant des rotules de type utilisé en aéronautique où l'anneau de rotule devenu monobloc avec l'axe de rotule est emprisonné dans l'anneau femelle par déformation des bords de la cage extérieure de rotule, les deux éléments, mâle et femelle, de la rotule étant rapportés sur les extrémités des pièces en liaison et susceptibles d'effectuer un mouvement relatif de rotule autour d'un centre de rotation commun. Le bras de guidage 44 peut avantageusement présenter une section de forme particulière, par exemple en C ou en H, lui assurant une rigidité importante dans toutes les directions de sollicitation et lui permettant de résister aux divers efforts transmis par l'axe de la roue.

A l'intérieur de la cloche 35c du disque de frein 35 dont la partie active 35a est sensiblement centrée sur l'axe médian 43 de la roue 13, la partie d'axe 39 du bras 12 présente vers le haut un prolongement 52 en forme générale de languette 53 sur laquelle viennent se fixer, généralement par des vis, un ou plusieurs étriers de frein à disque 54 dont les garnitures de freinage 55 enveloppent la partie active 35a du disque de frein 35 et dont le ou les cylindres de frein 56 sont reliés par une canalisation 57 en partie flexible à un émetteur de pression hydraulique 58 généralement commandé par une poignée de freinage 59 articulée au guidon 60 du motocycle.

La languette 53 est généralement disposée latéralement par rapport au plan de coupe de la figure 2 et on peut utiliser une languette unique soutenant, de part et d'autre, un étrier de frein 54.

Le fonctionnement de la suspension avant et de la direction de motocycle représentées sur les figures 1 et 2 va maintenant être explicité. Au cours du roulage, lorsque la roue avant 13 roule sur une aspérité, le bloc-moteur 1 doit s'abaisser par rapport à la zone d'appui 40a de la roue avant 13 sur le chemin de roulement 40 qui est relevé par l'aspérité. Le bras 44 tourne alors sur son axe d'articulation 48 sensiblement perpendiculaire au plan médian 43 de la roue avant 13 et se déplace en rotation dans une série de plans parallèles à ce plan médian 43, de telle façon que la rotule femelle 47 dont le centre d'articulation C47 est situé sur le plan médian 43 de la roue, ne reçoive pas de sollicitation latérale sous l'effet de la rotation relative du bras 44 par rapport au support avant 4 du bloc-moteur 1. Sous l'effet de la rotation du bras 44 par rapport au support avant 4, le bras unique 12 se rapproche du bec 11 en écrasant le ressort hélicoïdal 21 et en déplaçant le piston 22 à l'intérieur de l'alésage du corps 20 du bloc télescopique, de façon à amortir l'écrasement de la suspension. Le bras unique 12 de support de la roue est ainsi parfaitement libre de se débattre en fonction de l'écrasement plus ou moins grand de la suspension avant. Au cours du débattement du bras 12 par rapport au bec 11, l'inclinaison de l'axe de pivotement 64 de ce bras 12 (voir la figure 1 où cet axe se confond sensiblement, aux flexions près du bras 12, avec l'axe de la tige 23) varie légèrement sans qu'il ne s'ensuive de conséquences sur le plan de la tenue de route du motocycle.

La géométrie de l'ensemble doit être telle que l'axe 63 d'articulation de la biellette 51a soit sensiblement au centre de la courbure du chemin parcouru par le centre de la rotule 49,50 au cours des mouvements qui viennent d'être décrits de sorte que, par exemple en ligne droite, lorsque le véhicule passe sur une aspérité ou un trou, la biellette 51a ne tende pas à dévier latéralement la roue en tendant à écarter la rotule 49,50 du chemin géométrique que lui impose l'entrée en jeu de l'ensemble ressort/amortisseur 21,22.

Lorsque le conducteur du motocycle tourne le guidon 60, par exemple à l'entrée d'un virage, la biellette de direction 51a exerce un effort transversal sur la tige 49 qui fait tourner le bras unique 12 autour de l'axe de pivotement 64 qui passe par le centre d'articulation C47 de la rotule femelle 47 et sensiblement par le point médian C28 de la tige 28 sur laquelle est articulée la tête 27 de la tige 23. La rotation de la roue 13 pour diriger le véhicule ne provoque pas de réaction sensible sur le bras 44 du fait que l'axe de pivotement 64 passe par le centre de pivotement C47 de l'articulation à rotule 42, 47 et en retour, le bras 44 et le bras unique et unilatéral 12 de support de la roue n'exercent pas en virage, de réaction anormale sur la biellette de direction 51a, étant entendu qu'au cours d'un virage, l'action la plus décisive sur la direction du motocycle n'est en général pas exercée par le guidon 60 mais par l'inclinaison de l'ensemble conducteur-motocycle, cette inclinaison se développant sous le contrôle actif du conducteur.

En dehors des considérations mécaniques de commande de la direction et de libre débattement de la suspension, on peut remarquer que ce nouveau type de suspension et de direction associé à une roue de motocycle assure une tenue remarquable aux efforts horizontaux développés sur la roue avant 13 et qui sont encaissés par le bras horizontal 44 avec un minimum de flexion du bras unique 12 tout en assurant une excellente esthétique au véhicule en dépit de la dissymétrie de liaison inhérente à ce mode de tenue de la roue avant.

Le démontage de la roue avant 13 devient très aisé dans le mode de réalisation selon l'invention car cette roue peut être retirée aussitôt après le dévissage de l'écrou 38. Selon un autre aspect apprécié en compétition, le disque de frein 35 peut également être retiré et échangé dans de brefs délais, car après le démontage de la roue 13, il suffit de basculer le ou les étriers de frein 54 pour pouvoir retirer latéralement le disque de frein 35. Dans la disposition retenue selon l'invention pour l'étrier de frein, celui-ci, en dépit de sa position cachée à l'intérieur de la cloche de frein 35c par le talon de jante 15, est balayé par le flux d'air provoqué par la vitesse du déplacement du motocycle car l'air est dévié par la partie coudée 14 en direction de l'étrier 54 au cours du déplacement du motocycle.

Dans le mode de réalisation représenté à la figure 3, la commande de direction proprement dite est simplifiée à l'extrême. La tige 23 se prolonge vers le haut et traverse le bec 11 à travers des roulements de butée et de guidage 65 en appui sur ce bec 11 et est reliée par tout moyen adéquat, tel que clavetage ou bridage, au guidon 60 du motocycle. Pour entraîner en rotation le bras unique 12, il est nécessaire de relier en rotation la tige 23 et le corps 20 du bloc télescopique, de préférence sans perturber les étanchéités hydrauliques de la fonction amortisseur exercée par le piston 22. A cet effet, il est possible de rapporter autour de la sortie de la tige 23 hors du corps 20 un bloc de guidage en rotation 66 présentant un alésage cannelé dont les cannelures en creux sont traversées par des cannelures en relief ménagées sur la tige 23 dans une zone où cette tige 23 ne pénètre pas dans le corps 20.

Dans le mode de réalisation de la figure 3, la commande de direction par biellette latérale est évidemment supprimée et l'on voit que le guidon 60 est situé plus en avant que dans le mode de réalisation de la figure 1, ce qui présente certains avantages cinétiques et esthétiques, la résistance aux efforts longitudinaux étant de toute façon assurée par le bras 44.

On doit également remarquer dans ce mode de réalisation de la figure 3 que l'axe 32 de la roue avant 13 est placé légèrement en avant de l'axe de direction 64 de la roue avant 13, de façon à réaliser un départ qui améliore la tenue de route du motocycle ainsi que la stabilité de la direction en augmentant le rappel vers la ligne droite. Cette disposition peut également s'appliquer au mode de réalisation représenté sur les figures 1 et 2, le centre de pivotement C47 du bras de liaison 44 continuant de passer par le plan médian 43 du véhicule et de la roue avant 13 en position droite.

L'axe d'articulation 48 du bras 44 peut être disposé sur le support avant 4 à des hauteurs différentes par rapport au chemin de roulement 40 de façon à modifier l'inclinaison du bras 44 pour influer sur la courbe de variation de chasse et l'effet de contre-plongée au freinage de la suspension.

On peut, de même, disposer la liaison à rotule de centre C47 au-dessus de l'axe de roue tout en la maintenant dans l'alignement de l'axe de direction 64. Pour réaliser une telle disposition, il faut prévoir, dans la partie d'axe 39 du bras unilatéral 12, un évidement permettant de loger l'articulation à rotule. Selon une autre variante, l'articulation à rotule de centre C47 peut entourer la fusée de roue qui traverse alors la rotule à l'extrémité du bras 44. Cette solution permet d'utiliser une rotule de plus grand diamètre et, notamment, une rotule à billes, l'axe de la roue avant 13 passant alors obligatoirement par le centre de rotule C47.

La longueur efficace du bras 44 peut être rendue réglable dans une faible plage de débattement en longueur en fixant le support de la pièce de rotule 47 (mâle ou femelle selon le cas) à l'extrémité de ce bras d'une façon aisément réglable, notamment par rotation d'une pièce intermédiaire. Cette disposition permet de faire varier l'angle dit "de chasse" α (voir figure 1) du bras unilatéral 12 jouant le rôle de fourche par rapport à la verticale et d'adapter ainsi les qualités de la direction (rappel, stabilité en ligne droite, couple de rotation à l'arrêt) en fonction de l'utilisation envisagée pour le motocycle. La liaison entre le support de pièce de rotule et le bras de guidage bas 44 peut être une liaison coulissante contrôlée par un vérin, notamment par un vérin hydraulique dont la course est asservie à un paramètre du motocycle, notamment à la vitesse de celui-ci, de manière à faire varier l'angle de chasse α de la roue avant 13 en fonction de la vitesse du motocycle pour raidir la direction à vitesse élevée et la rendre plus douce à faible vitesse. Le vérin hydraulique peut, pour cela, agir à l'encontre d'un ressort de positionnement et être actionné à l'encontre du ressort à une pression d'autant plus élevée que la vitesse du motocycle est élevée.

Selon un mode de réalisation particulièrement simple et avantageux de l'invention, le ressort hélicoïdal de suspension 21 s'appuie sur la plaque supérieure 26 ou sur la coupelle inférieure 30 de façon désaxée, c'est-à-dire que la plaque 26 et/ou la coupelle 30 est désaxée dans le plan médian 43 du motocycle par rapport à l'axe de direction 64 confondu avec l'axe du corps de bloc télescopique 20 et l'axe de la tige de piston 23. Au cours de la rotation de la roue avant 13, le ressort de suspension 21 exerce ainsi un couple de torsion sur la coupelle 30 et le bras 12 qui tend à rappeler la roue en ligne droite. Le désaxage du ressort 21 peut être obtenu de façon plus compacte en utilisant un ressort hélicoïdal de forme générale tronconique (ressort spiro conique) dont la base présente, par exemple, un diamètre supérieur à celui du sommet et est excentrée vers l'avant par rapport à l'axe du corps 20.

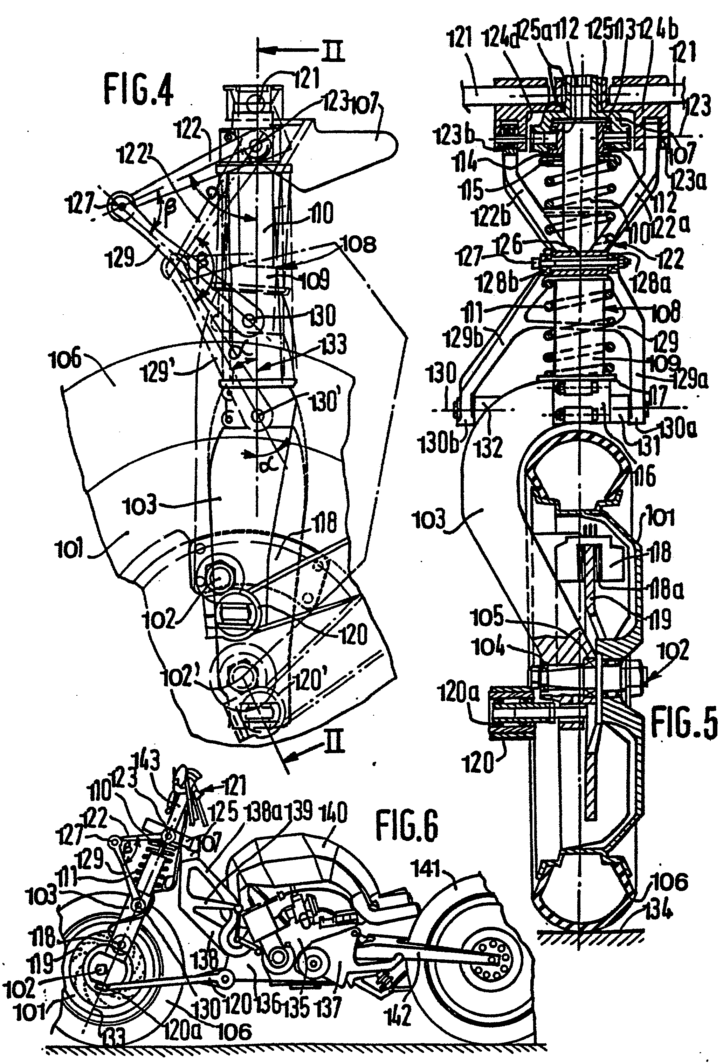

Si l'on se rapporte aux figures 4 et 5, on voit que la roue avant 101 du motocycle est rendue solidaire d'un arbre de roue 102 qui est porté par un bras support unique 103 par l'intermédiaire de paliers à roulements 4 et 5. Le bras support 103 qui présente transversalement une forme arquée entourant latéralement la partie périphérique de la roue 101 et du bandage pneumatique 106 de cette roue, est relié à un bec avant 107 du châssis du motocycle par l'intermédiaire d'un bloc 108 de suspension et d'amortissement constitué d'un corps d'amortisseur 109 à tige extérieure 110, entouré par un ressort hélicoïdal de suspension 111. La tige extérieure 110 est articulée au bec avant 107 par une articulation à deux paliers à roulements 112 (qui pourraient être remplacés dans une réalisation moins élaborée par une liaison en élastomère du type "silent bloc") autorisant les variations d'inclinaison du bras support 103. La tige 110 est solidaire à une extrémité et à l'intérieur du cylindre du corps d'amortisseur 109 d'un piston d'amortisseur non représenté et, à son autre extrémité, d'un manchon 113 qui porte les paliers à roulements 112 et sur lequel vient en appui par l'intermédiaire d'une butée à faible frottement 114 (par exemple à aiguilles), et d'une coupelle 115, l'extrémité supérieure du ressort hélicoïdal de suspension 111. Le corps d'amortisseur 109 est fixé, par serrage à sa partie inférieure, à l'aide d'une bride 116 à la partie supérieure du bras support 103 et est entouré par une coupelle 117 d'appui de l'extrémité inférieure du ressort 111 sur le bras 103, cette coupelle 117 pouvant également comporter une butée à faible frottement. De façon classique, le bras support 103 porte un étrier de frein à disque 118 traversé au niveau des garnitures de friction 118a par un disque de frein 119 solidaire simultanément de la roue 101 et de l'arbre 102 de la roue avant, et ce bras 103 est relié par un bras de guidage bas 120 au bloc moteur du motocycle. Pour des raisons d'esthétique et de protection contre les agressions extérieures, le ressort de suspension 111 peut être logé entièrement à l'intérieur du corps d'amortisseur 109, à la manière du montage classique des fourches télescopiques de motocycle.

La présente invention a notamment pour but de relier un guidon de commande à deux bras 121 au bras support 103, de manière à faire tourner ce bras support 103 en synchronisme avec le guidon 121 quels que soient la position de la tige 110 et l'écrasement du ressort de suspension avant 111 du motocycle. On prévoit pour cela une biellette haute 122 articulée à son extrémité supérieure en 123 par des paliers à roulement 123a et 123b, à des bossages 124a et 124b d'une couronne de réception 125 des tubes droit et gauche du guidon 121. La couronne de réception 125 est articulée à rotation par des paliers à roulement 125a verticalement sur le bec 107. La biellette 121 présente une fourche supérieure à deux branches 122a et 122b et une liaison inférieure à palier unique 126 traversé par un boulon d'assemblage 127 et disposé entre deux paliers 128a, 128b d'une biellette basse 129. La biellette haute 122 est inclinée vers l'avant du motocycle à partir de son extrémité supérieure tandis que la biellette basse 129 est inclinée vers l'avant à partir de son extrémité inférieure à deux branches 129a et 129b de manière que l'articulation en ciseaux de ces deux biellettes prenne une forme en V pointée vers l'avant du motocycle. La biellette basse 129 est articulée par ses deux branches inférieures 129a et 129b respectivement par des paliers 130a et 130b à des bossages 131 et 132 ménagés sur le bras support 103 sensiblement au niveau de la bride 116.

On a représenté sur la figure 4 en traits mixtes (les éléments déplacés étant affectés de l'indice prime) la position des biellettes 122 et 129 (indiquées 122′ et 129′) lorsque la suspension de la roue avant du motocycle est détendue au maximum, ce qui correspond à la représentation de la figure 4 et en traits pleins la position de ces biellettes lorsque cette suspension est écrasée au maximum. On remarque sur la figure 5 que les biellettes haute et basse 122, 129 présentent sensiblement la même longueur et que l'angle α que leurs lignes moyennes respectives forment avec l'axe longitudinal 133 du bloc de suspension 108 en position d'extension maximale de ce bloc de suspension est d'environ 30°, l'angle obtus β du V entre les deux biellettes étant de 120° environ. En position d'écrasement maximum de la suspension de la roue avant, pour laquelle les bielles 122 et 129 sont représentées en traits pleins à la figure 5, l'angle α est voisin de 60°, ce qui est également la valeur de l'angle aigu β entre les deux biellettes. La biellette inférieure 129 comporte à chaque extrémité une fourche à deux branches mais les deux biellettes 122 et 129 présentent toutes les deux la forme générale d'un trapèze dont la grande base est articulée respectivement au guidon 121 (biellette haute 122) et au bras support de roue 103 (biellette basse 129) et dont les petites bases sont accolées l'une à l'autre dans la zone traversée par le boulon d'assemblage 127 et sont articulées entre elles d'une façon permettant de transmettre le couple de rotation du guidon 121 au bras support 103 et à la roue 101.

Les biellettes à deux branches 122 et 129 pourraient être remplacées chacune par deux biellettes séparées articulées l'une à l'autre sur une tige remplaçant le boulon 127. On remarque que les paliers d'articulation des extrémités respectives supérieure de la biellette 122 et inférieure de la biellette 129 sont situées au-delà des plans d'appui des extrémités respectives du ressort de suspension 111. Ces plans d'appui du ressort 111 sont constitués par le palier à roulement 113 et par la coupelle 117 qui peut également être munie d'une butée à faible frottement. Le guidon à deux bras 121 peut être remplacé par un guidon continu pincé par une bride de serrage en avant ou en arrière de l'axe d'articulation 123 de la biellette haute 122. Cette disposition permet d'adapter le guidon 121 à la morphologie du conducteur du motocycle.

Le fonctionnement du dispositif de commande de direction qui vient d'être explicité en regard des figures 4 et 5 est aisé à imaginer. Lorsque le conducteur du motocycle tourne le guidon 121, les bras 122a et 122b de la biellette haute 122 tournent, entraînés en rotation par les bossages 124a et 124b et font tourner le boulon 127 qui traverse le palier unique 126. Les paliers 128a et 128b de la biellette basse 129 sont entraînés en rotation par le boulon 127 et entraînent également en rotation du même angle la biellette basse 129 et le bras 103 qui positionne l'axe 102 de la roue 101 sensiblement dans la direction commandée par le guidon 121, la légère différence entre la rotation du guidon 121 et celle de la roue 101 étant due principalement à la flexion de torsion des biellettes et à la réaction de la traînée du bandage pneumatique 106 sur son chemin de roulement 134. En cas de débattement de la suspension avant du motocycle par écrasement ou extension du ressort 111, les biellettes 122 et 129 tournent l'une par rapport à l'autre en ciseaux autour de l'articulation constitué par le boulon 127 et de leurs autres articulations d'extrémités 123 et 130 en faisant varier les angles α et β en sens inverse, sans que la transmission du couple entre le guidon 121 et le bras support 103 n'en soit affectée. On remarque également que plus la charge appliquée par le bec avant 107 du chassis sur la roue 101 est importante, notamment en cas de freinage, plus le boulon d'articulation 127 tend à s'éloigner de la roue 101, ce qui facilite le contrôle par le guidon 121 des réactions en provenance de la roue 101, précisément au moment où ces réactions sont maximales du fait du report de la charge sur la roue avant.

La figure 6 illustre une variante de la commande de direction selon l'invention en représentant à plus petite échelle les éléments essentiels de l'ensemble du motocycle. Les pièces et parties identiques à celles des figures 4 et 5 portent les mêmes repères de référence qui ne seront donc pas explicités à nouveau. Parmi les éléments qui n'ont pas encore été explicités, on relève le bloc moteur-transmission 135 et ses plaques supports avant 136 et arrière 137 reliées au châssis avant 138 du motocycle qui porte le bec 107 avec des barres 138a et 139 de raidissement et de liaison au bloc moteur 135, les conduites hautes 140 d'échappement, la roue arrière 141 et son bras de suspension 142 ainsi que l'articulation basse 120a du bras de guidage 120 à la partie inférieure du bras support 103 en-dessous de l'arbre de roue 102 (représentée également en coupe sur la figure 5).

Dans le mode de réalisation de la figure 6, le guidon 121 comporte un tube vertical 143 solidaire de la couronne de réception 125 articulée verticalement à rotation sur le bec 107. Le guidon 121 peut ainsi être placé en position nettement plus haute que l'extrémité supérieure de la bielle 122, ce qui permet d'améliorer la position du pilote du motocycle, en particulier pour les motocycles de tourisme.

Lorsque le motocycle représenté à la figure 6 roule sur son chemin de roulement 134, la rotation du guidon 121 fait tourner le tube 143 et la couronne 125 qui entraîne les bielles 122 et 123 en rotation par leurs articulations respectives 123, 127 et 130 (voir les figures 4 et 5) et par voie de conséquence, le bras support 103 de la roue 101. L'écrasement du ressort de suspension 111 fait refermer le V formé entre les biellettes 122 et 129 et réduit l'angle β formé entre ces deux biellettes sans que la liaison de transmission des couples ne soit interrompue entre la couronne 125 articulée à rotation sur le bec 107 du châssis et le bras support 103 de la roue avant 101. On remarque sur la figure 6 que les biellettes 122 et 129 ne détruisent pas l'esthétique générale du motocycle et sont totalement indépendantes du bloc de suspension et d'amortissement 108 qui peut ainsi être choisi de façon à obtenir le meilleur compromis entre les performances de suspension et d'amortissement et les contraintes de disponibilité et de coût.

## Revendications

1. Dispositif à bras unilatéral de suspension avant, de support et de direction d'une roue avant (13) de motocycle, ledit bras (12) étant susceptible de tourner autour d'un axe de direction ou de pivotement (64) sensiblement orthogonal à celui de ladite roue (13) et situé sensiblement dans le plan longitudinal médian du motocycle, et comportant d'une part une partie coudée en forme de C (14) qui enveloppe une partie de la section transversale de la périphérie (15, 16, 17) de la roue (13), et d'autre part, une partie basse (39) portant l'axe (32) de la roue (13) et qui est munie d'une pièce d'articulation à rotule (47, 42) dont le centre de pivotement (C47) est situé sensiblement dans l'alignement de l'axe de direction (64) et qui coopère avec une pièce conjuguée (47) d'articulation de rotule montée à l'extrémité d'un bras de liaison (44) lui-même monté à rotation sur un axe (48) du châssis du motocycle, perpendiculairement au plan médian (43) du motocycle pour assurer le guidage latéral dudit bras unilatéral, caractérisé en ce que le bras unilatéral (12) est relié à son extrémité supérieure à un corps (20) de bloc de suspension et d'amortissement (21, 22) à cylindre télescopique dont la tige de piston mobile extérieure (23), d'une part s'articule par son extrémité sur un bec avant (11) du châssis (8, 9, 10) du motocycle, et d'autre part présente un axe géométrique qui se confond sensiblement avec l'axe de pivotement (64) du bras (12), de telle manière que ledit bras unilatéral (12) pourtant la roue avant (13) soit reliée au châssis (8, 9, 10) du motocycle uniquement par la tige de piston (23) et par le bras de liaison bas (44) qui constituent une liaison triangulée de suspension intégrant ledit bras latéral dans le côté du triangle dont la longueur varie en fonction de la charge appliquée à la suspension et que la rotation de direction du bras unilatéral (12) sous l'action d'un organe de commande de direction (biellette 51, guidon 60) provoque une rotation du corps (20) du bloc de suspension et d'amortissement par rapport à ladite tige de piston (23) et au piston d'amortisseur (22) auquel elle est reliée et, par voie de conséquence, un amortissement de rotation de la direction du motocycle.

2. Dispositif selon la revendication 1, caractérisé en ce que la partie coudée en C (14) du bras unilatéral (12) est reliée par une articulation à rotule (50, 51) à une biellette de direction (51a) apte à orienter la roue (13) par rotation du bras unilatéral (12) et du bloc de suspension et d'amortissement (21, 22) dont la tige mobile (23) est solidaire en rotation du bec avant (11) du châssis auquel elle transmet le couple rotatif de frottement exercé sur le piston d'amortisseur (22) par le corps (20) dudit bloc de suspension et d'amortissement.

3. Dispositif selon la revendication 2, caractérisé par le fait que l'axe de rotation (63) de la biellette de direction (51a) est disposé sensiblement au centre de courbure du chemin géométrique parcouru par le centre de la rotule de direction (59, 51) au cours du débattement du bloc de suspension et d'amortissement (21, 22).

4. Dispositif selon la revendication 1, caractérisé en ce que la tige de piston mobile (23) du bloc télescopique (20) est en appui axial sur le bec avant (11) du châssis du motocycle qu'elle traverse librement à rotation tandis qu'elle est mobile axialement à l'intérieur du bloc télescopique (20) dont elle est rendue solidaire en rotation et en ce que la partie de ladite tige mobile (23) qui dépasse au-dessus du bec avant (11) est rendue solidaire d'un guidon (60) à deux poignées, de commande directe de l'orientation de la roue avant (13).

5. Dispositif selon les revendications 1 à 4, caractérisé en ce que le bras unilatéral (12) comporte au voisinage de l'axe (32) de la roue (13) un prolongement (53) dirigé vers la jante (15) de la roue et vers le bloc télescopique (20) et sur lequel est fixé, par des moyens appropriés tels que des vis, au moins un étrier de frein à disque (54) entourant un disque de frein (35) rendu solidaire au moins en rotation de l'axe tournant (32) de la roue (13).

6. Dispositif selon les revendications 1 à 5, caractérisé en ce que l'axe (32) de la roue est monté rotatif à l'intérieur du bras unilatéral (12) par l'intermédiaire d'au moins un roulement (33, 34) immobilisé axialement par des moyens d'arrêt dans un alésage (31) du bras unilatéral (12) et fait saillie du côté opposé au bras unilatéral par une partie de fixation (32a) de forme cannelée ou équivalente, apte à être rendue solidaires en rotation de façon amovible du disque de frein (35) et du voile (37) de la roue avant (13), cette partie de fixation étant prolongée par une partie filetée (32b) de réception d'un écrou de serrage rapide (38) de la roue et du disque de frein, de manière à permettre le changement rapide de la roue avant et, le cas échéant, du disque de frein (35) après basculement du ou des étriers de frein (54).

7. Dispositif selon la revendication 5, caractérisé en ce que le support d'articulation à rotule qui coopère avec le bras de liaison (44) est constitué par une tige (41) qui est solidaire du bras unilatéral (12) et qui fait saillie en direction du chemin de roulement (40) de la roue avant (13) et dont l'axe est situé sensiblement dans le plan médian (43) de la roue avant, une bague ou un noyau de rotule (42) étant disposé sur cette tige (41) et articulé sur l'extrémité conjuguée (47) du bras de liaison (44) et en ce qu'au moins la tige (41) et une partie de la bague ou du noyau de rotule (42) et de l'extrémité conjuguée (47) du bras de liaison (44) sont logés à l'intérieur de la cloche (35c) du disque de frein (35).

8. Dispositif selon les revendications 1 à 7, caractérisé en ce que la tige mobile extérieure (110) du cylindre télescopique (108) est articulée sur le bec avant (107) du châssis du motocycle par l'intermédiaire d'une tige (112) dont l'axe est orthogonal au plan médian du motocycle, qui est solidaire du bec avant (107) et qui traverse à rotation un alésage d'une tête d'articulation reliée, le cas échéant de façon réglable, à la tige mobile (110).

9. Dispositif selon les revendications 1 à 6, caractérisé en ce que la pièce conjuguée (47) d'articulation de rotule est montée de façon réglable à l'extrémité du bras de liaison (44) de manière à permettre le réglage de l'angle de chasse (α) de la roue avant (13) du motocycle.

10. Dispositif selon la revendication 9, caractérisé en ce que la liaison réglable entre l'extrémité du bras de liaison (44) et la pièce conjuguée (47) d'articulation de rotule est une liaison coulissante ou mobile contrôlée par un vérin de manoeuvre asservi à la vitesse du motocycle, de manière à faire varier l'angle de chasse (α) de la roue avant (13) en fonction de la vitesse du motocycle.

11. Dispositif selon les revendications 1 à 10, caractérisé en ce que le bloc de suspension et d'amortissement (20, 21, 22) comporte un ressort hélicoïdal (21) de forme générale cylindrique ou tronconique et dont l'axe longitudinal, tout en étant situé sensiblement dans le plan médian (43) du motocycle, est excentré par rapport à l'axe du cylindre télescopique (20), par suite de l'excentration par rapport audit axe d'au moins l'une des coupelles ou plaques (26, 30) de réception de l'extrémité de ce ressort (21), de manière à provoquer sur le bras unilatéral (12) un couple de rappel vers la position en ligne droite.

12. Dispositif à bras unilatéral de suspension avant, de support et de direction d'une roue selon les revendications 1 et 4 à 11, notamment pour une roue avant de motocycle portée par le bras unilatéral relié à son extrémité supérieure à un bloc de suspension et/ou d'amortissement dont la tige mobile extérieure s'articule à son extrémité sur un bec avant du châssis du motocycle, caractérisé en ce que le ressort du bloc de suspension et/ou d'amortissement (108) est un ressort hélicoïdal (111) dont au moins l'un des plans d'appui des extrémités comporte une butée à faible frottement (114) autorisant la libre rotation du ressort (111) autour de son axe longitudinal (133) au cours de son débattement.

13. Dispositif selon la revendication 12, caractérisé en ce que sa commande de direction est constituée d'un guidon (121) ou volant monté rotatif sur un axe vertical dudit bec avant (107) et articulé à rotation autour d'un axe (123) sensiblement perpendiculaire au plan médian de la roue avant, c'est-à-dire au plan de direction, à l'extrémité supérieure d'au moins une biellette haute (122) inclinée vers l'avant du motocycle à partir de son extrémité supérieure et dont l'extrémité inférieure est également articulée à rotation autour d'un axe (127) sensiblement perpendiculaire audit plan de direction, à l'extrémité supérieure d'au moins une biellette basse (129) inclinée vers l'avant du motocycle à partir de son extrémité inférieure qui est reliée à rotation au bras unilatéral (103) autour d'un axe (130) sensiblement perpendiculaire audit plan de direction, de manière que les biellettes haute et basse (122, 129) reliées en rotation respectivement au guidon (121) et au bras unilatéral (103) s'articulent en ciseaux entre elles au cours du débattement de la suspension avant (108, 111) du motocycle.

14. Dispositif selon la revendication 13, caractérisé en ce que la liaison à rotation (123) de l'extrémité supérieure de la biellette haute (122) et celle (130) de l'extrémité inférieure de la biellette basse (129) sont situées au-delà des plans d'appui (114, 117) des extrémités du ressort hélicoïdal (111) constituant le ressort de suspension du bloc de suspension (108).

15. Dispositif à bras unilatéral de suspension avant, de support et de direction d'une roue selon les revendications 1 et 4 à 11, notamment pour une roue avant de motocycle portée par au moins un bras support relié à son extrémité supérieure à un bloc de suspension et/ou d'amortissement dont la tige mobile extérieure s'articule à son extrémité sur un bec avant du châssis du motocycle, caractérisé en ce qu'il comporte un guidon (121) ou volant monté rotatif sur un axe vertical dudit bec (107) et articulé à rotation autour d'un axe (123) sensiblement perpendiculaire au plan médian de la roue avant, c'est-à-dire au plan de direction, à l'extrémité supérieure d'au moins une biellette haute (122) inclinée vers l'avant du motocycle à partir de son extrémité supérieure et dont l'extrémité inférieure est également articulée à rotation autour d'un axe (127) sensiblement perpendiculaire audit plan de direction, à l'extrémité supérieure d'au moins une biellette basse (129) inclinée vers l'avant du motocycle à partir de son extrémité inférieure qui est reliée à rotation au bras support (103) autour d'un axe (130) sensiblement perpendiculaire audit plan de direction, de manière que les biellettes haute et basse (122, 129) reliées en rotation respectivement au guidon (121) et au bras support (103) s'articulent en ciseaux entre elles au cours du débattement de la suspension avant (108, 111) du motocycle, et en ce que la liaison à rotation (123) de l'extrémité supérieure de la biellette haute (122) et celle (130) de l'extrémité inférieure de la biellette basse (129) sont situées au-delà des plans d'appui (114, 117) des extrémités du ressort hélicoïdal (111) constituant le ressort de suspension du bloc de suspension (108).

16. Dispositif selon la revendication 15, caractérisé en ce que la biellette haute (122) et la biellette basse (129) présentent sensiblement la même longueur et en ce que leurs lignes moyennes respectives forment, en position d'extension maximale du bloc de suspension, un angle (α) d'environ 30° avec l'axe longitudinal (133) de ce bloc de suspension.

17. Dispositif selon la revendication 15, caractérisé en ce que la biellette haute (122) et la biellette basse (129) présentent des longueurs nettement différentes et en ce que leurs lignes moyennes respectives forment, en position d'extension maximale du bloc de suspension (108), un angle (α) inférieur à 30° avec l'axe longitudinal (133) de ce bloc de suspension.

18. Dispositif selon la revendication 17, caractérisé en ce que la biellette haute (122) présente une longueur nettement inférieure à celle de la biellette basse (129) de manière à éloigner de la roue avant (101) l'axe d'articulation (127) entre les deux biellettes.

19. Dispositif selon les revendications 15 à 18, caractérisé en ce que l'axe d'articulation (123) de la biellette haute (122) est sensiblement coaxial à l'axe d'articulation de la tige mobile extérieure (110) du bloc de suspension et d'amortissement (108) sur le bec avant (107) du chassis (138) du motocycle.

20. Dispositif selon la revendication 15 ou 19, caractérisé en ce que la biellette haute (122) présente, à sa partie supérieure, une fourche à deux branches (122a, 122b) dont chacune est reliée à rotation à un bossage (124a, 124b) d'un bras du guidon (121) et respectivement, à sa partie inférieure, à un palier central unique (126) qui est traversé par un boulon ou tige d'assemblage (127) et est disposé entre deux paliers (128a, 128b) qui sont également traversés par le boulon d'assemblage et qui sont ménagés à chacune des extrémités des deux branches d'une fourche de la biellette basse (129) qui se prolonge par deux branches inférieures (129a, 129b) reliées chacune à rotation à un bossage correspondant (131, 132) ménagé sur le bras support (103).

21. Dispositif selon les revendications 15 à 20, caractérisé en ce que les biellettes haute et basse (122, 129) présentent la forme générale d'un trapèze dont la grande base est articulée respectivement au guidon (121) et au bras support (103) de roue avant et dont les petites bases sont accolées l'une à l'autre et articulées entre elles.

22. Dispositif selon les revendications 15 à 21, caractérisé en ce que l'un au moins des plans d'appui des extrémités du ressort hélicoïdal (111) comporte une butée à faible frottement (114), autorisant la libre rotation du ressort (111) autour de son axe longitudinal (133) au cours de son débattement.

**Patentansprüche**

1. Aufhängungs- und Lenkvorrichtung für das Vorderrad (13) eines Motorrades mit einem einseitig angeordneten Tragarm (12), der um eine zur Achse des Rades (13) im wesentlichen senkrechte und im wesentlichen in der mittleren Längsebene des Motorrads liegende Achse (64) drehbar ist, und der einerseits einen C-förmig gebogenen Teil (14) aufweist, der einen Teil des Umfangsquerschnitts (15, 16, 17) des Rades umgreift, sowie andererseits einen unteren Teil (39), der die Achse (32) des Rades (13) trägt und mit einem Kugelgelenkteil (47, 42) ausgerüstet ist, dessen Schwenkmittelpunkt (C47) im wesentlichen auf der Lenkachse (64) liegt und der mit einem zugehörigen Kugelgelenkteil (42, 47) zusammenwirkt, welcher am Ende eines Verbindungsarmes (44) angeordnet ist, der seinerseits drehbar um eine Achse (48) des Motorradrahmens gelagert ist, die senkrecht zur Mittelebene (43) des Motorrads liegt, um den seitlichen Arm seitlich zu führen, dadurch gekennzeichnet, dass der einseitig angeordnete Arm (12) an seinem oberen Ende mit einem Aufhängungs- und Dämpfungsblock verbunden ist, der einen teleskopischen Zylinder (20) aufweist, dessen bewegliche äussere Kolbenstange (23) zum Einen an ihrem Ende an einen vorderen Schnabel (11) des Motorradrahmens (8, 9, 10) angelenkt ist, und zum Anderen eine geometrische Achse aufweist, die im wesentlichen mit der Schwenkachse (64) des Armes (12) zusammenfällt, sodass der das Vorderrad (13) tragende einseitig angeordnete Tragarm (12) nur durch die Kolbenstange (23) und durch den unteren Verbindungsarm (44) mit dem Motorradrahmen (8, 9, 10) verbunden ist, welche eine dreiecksförmige Aufhängungsverbindung bilden, die den genannten einseitig angeordneten Tragarm in diejenige Seite des Dreieckes einbezieht, deren Länge in Abhängigkeit von der auf die Aufhängung wirkenden Belastung veränderlich ist, und dass die durch Einwirkung eines Lenkorganes (Stange 51, Lenkstange 60) bewirkte Lenkdrehung des einseitig angeordneten Armes (12) eine Drehung des Körpers (20) des Aufhängung- und Dämpfungsblockes bezüglich der genannten Kolbenstange (23) und des Dämpfungskolbens (22), mit dem sie verbunden ist, herbeiführt und folglich eine Drehdämpfungswirkung auf die Lenkung des Motorrades ausübt.

2. Vorrichtung nach Anspruch 1, dadurch gekennzeichnet, dass der C-förmige Teil (14) des einseitig angeordneten Armes (12) über ein Kugelgelenk (50, 51) mit einer Lenkungsstange (51a) verbunden ist, die die Lenkrichtung des Rades (13) durch Drehung des seitlich angeordneten Armes (12) und des teleskopischen Blockes (20) einstellen kann, dessen bewegliche Stange (23) mit dem vorderen Schnabel (11) drehfest verbunden ist, der das durch die Reibung zwischen dem Körper (20) des teleskopischen Blockes und dem Stossdämpferkolben (22) bedingte Reibungsmoment aufnimmt.

3. Vorrichtung nach Anspruch 2, dadurch gekennzeichnet, dass die Drehachse der Lenkungsstange (51a) im wesentlichen im Krümmungsmittelpunkt der vom Mittelpunkt des Kugelgelenks (50, 51) bei Ausschlagen des Aufhängungs- und Dämpfungsblockes (21, 22) beschriebenen Bahnkurve liegt.

4. Vorrichtung nach Anspruch 1, dadurch gekennzeichnet, dass die bewegliche Stange (23) des teleskopischen Blocks (20) sich axial am vorderen Schnabel (11) des Motorradrahmens abstützt und denselben frei drehbar durchquert, wohingegen sie im teleskopischen Block (20), mit welchem sie drehfest verbunden ist, axial beweglich ist, und dass der den vorderen Schnabel (11) überragende Teil der beweglichen Stange (23) mit einer zwei Handgriffe aufweisenden Lenkstange (60) zum direkten Lenken des Vorderrads (13) fest verbunden ist.

5. Vorrichtung nach einem der Ansprüche 1 bis 4, dadurch gekennzeichnet, dass der einseitig angeordnete Tragarm (12) in der Nähe der Radachse (32) einen sich zur Felge (15) des Rades und zum teleskopischen Block (20) hin erstreckenden Ansatz (53) aufweist, an dem durch geeignete Mittel, wie Schrauben, wenigstens ein Scheibenbremsenbügel (54) befestigt ist, der eine Bremsscheibe (35) umgreift, die mit der umlaufenden Achse (32) des Rades (13) wenigstens drehfest verbunden ist.

6. Vorrichtung nach einem der Ansprüche 1 bis 5, dadurch gekennzeichnet, dass die Radachse (32) unter Zwischenschaltung wenigstens eines in einer Bohrung (31) des Tragarms (12) durch Haltemittel axial festgelegten Wälzlagers (33, 34) drehbar im einseitig angeordneten Tragarm (12) gelagert ist und an der dem einseitig angeordneten Tragarm entgegengesetzten Seite in Form eines geriffelten oder dergleichen Befestigungsteils (32a) hervorsteht, welch letzterer lösbar drehfest mit der Bremsscheibe (35) und dem Radteller (37) des Vorrades (13) verbindbar und durch einen Gewindeteil (32b) zur Aufnahme einer Schnellspannmutter (38) zum Halten des Rades und der Scheibenbremse verlängert ist, derart, dass ein schnelles Auswechseln des Vorderrades und gegebenenfalls der Bremsscheibe (35) nach Verschwenken des (der) Bremsbügels (Bremsbügel) (54) möglich ist.

7. Vorrichtung nach Anspruch 5, dadurch gekennzeichnet, dass das mit dem Verbindungsarm (44) zusammenwirkende Kugelgelenkhaltelement aus einer Stange (41) besteht, die Teil des einseitig angeordneten Tragarmes (12) ist und in Richtung des Fahrweges (40) des Vorderrades (13) absteht und deren Achse im wesentlichen in der Mittenebene (43) des Vorrades liegt, wobei an dieser Stange (41) ein Kugelgelenkring oder ein Kugelgelenkkern (42) angeordnet und an dem entsprechende Enden (47) des Verbindungsarmes (44) angelenkt ist, und dass zumindest die Stange (41) und ein Teil des Kugelgelenkrings bzw. Kugelgelenkkerns (42) und des entsprechenden Endes (47) des Verbindungsarms (44) innerhalb der Kuppel (35c) der Scheibenbremse (35) angeordnet sind.

8. Vorrichtung nach einem der Ansprüche 1 bis 7, dadurch gekennzeichnet, dass die bewegliche Aussenstange (110) des teleskopischen Zylinders (108) am vorderen Schnabel (107) des Motorradrahmens mittels einer Stange (112) angelenkt ist, deren Achse zur Mittenebene des Motorrads senkrecht ist, die mit dem vorderen Schnabel (107) fest verbunden ist und drehbar eine Bohrung eines gegebenenfalls einstellbar mit der beweglichen Stange (110) verbundenen Anlenkkopfs durchquert.

9. Vorrichtung nach einem der Ansprüche 1 bis 6, dadurch gekennzeichnet, dass der zugehörige Kugelgelenkteil (47) einstellbar am Ende des Verbindungsarms (44) derart angeordnet ist, dass der Vorlaufwinkel (alpha) des Vorderrades (13) des Motorrades einstellbar ist.

10. Vorrichtung nach Anspruch 9, dadurch gekennzeichnet, dass die einstellbare Verbindung zwischen dem Ende des Verbindungsarms (44) und dem zugehörigen Kugelgelenkteil (47) eine Gleitverbindung bzw. bewegliche Verbindung ist, die durch einen in Abhängigkeit von der Geschwindigkeit des Motorrades gesteuerten Druckzylinder betätigt wird, derart, dass der Vorlaufwinkel (a) des Vorderrades (13) in Abhängigkeit von der Geschwindigkeit des Motorrads verändert wird.

11. Vorrichtung nach einem der Ansprüche 1 bis 10, dadurch gekennzeichnet, dass der Aufhängungs- und Dämpfungsblock (20, 21, 22) eine im wesentlichen zylindrische bzw. kegelstumpfförmige Schraubenfeder (21) aufweist, deren Achse im wesentlichen in der Mittenebene (43) des Motorrades, jedoch in bezug auf die Achse des teleskopischen Zylinders (20) exzentrisch liegt, und zwar infolge der in bezug auf diese Achse exzentrischen Anordnung wenigstens einer der Aufnahmeschalen bzw. -platten (26, 30) für das Ende der Feder (21), derart, dass auf den einseitig angeordneten Tragarm (12) ein Rückholmoment zur Geradeausstellung wirkt.

12. Vorderaufhängungs- und Lenkvorrichtung für ein Rad nach einem der Ansprüche 1 und 4 bis 11, insbesondere für das Vorderrad eines Motorrades, das von einem einseitig angeordneten Tragarm getragen wird, dessen oberes Ende mit einem Aufhängungs- bzw. Dämpfungsblock verbunden ist, welcher eine äussere bewegliche Stange besitzt, deren Ende an einen vorderen Schnabel des Motorradrahmens angelenkt ist, dadurch gekennzeichnet, dass die Feder des Aufhängungs- bzw. Dämpfungsblockes (108) eine Schraubenfeder (111) ist, bei welcher wenigstens eine der Stützebenen für die Enden dieser Feder einen Anschlag (114) mit geringer Reibung aufweist, der es der Feder (111) gestattet, sich beim Ausschlagen frei um ihre Längsachse (133) zu drehen.

13. Vorrichtung nach Anspruch 12, dadurch gekennzeichnet, dass ihre Lenkmittel aus einer Lenkstange (121) oder einem Lenkrad bestehen, wobei die Lenkstange (Lenkrad) um eine senkrechte Achse des Vorderschnabels drehbar angeordnet und um eine zur Mittelebene des Vorderrads (d.h. zur Lenkebene) wesentlich senkrechten Achse (123) drehbar an das obere Ende wenigstens eines oberen Schwingarms (122) angelenkt ist, der von seinem oberen Ende aus zur Vorderseite des Motorrads geneigt ist und dessen unteres Ende ebenfalls um eine zur Lenkebene im wesentlichen senkrechte Achse (127) drehbar an das obere Ende wenigstens eines unteren Schwingarms (129) angelenkt ist, welcher von seinem unteren Ende aus zur Vorderseite des Motorrads geneigt ist, wobei dieses untere Ende des unteren Schwingarms um eine zur Lenkebene im wesentlichen senkrechte Achse (130) drehbar mit dem einseitig angeordneten Tragarm (103) verbunden ist, derart, dass die einerseits mit der Lenkstange (121) und andererseits mit dem Tragarm (103) schwenkbar verbundenen Schwingarme (122, 129) während der Ausschlagbewegungen der Vorderaufhängung (108, 111) des Motorrads scherenartig miteinander zusammenwirken.

14. Vorrichtung nach Anspruch 13, dadurch gekennzeichnet, dass die Dreh- bzw. Schwenkverbindung (123) des oberen Endes des oberen Schwingarmes (122) und diejenige (130) des unteren Endes des unteren Schwingarmes (129) jenseits der Abstützflächen (114, 117) der Enden der die Aufhängungsfeder des Aufhängungsblocks (108a) bildenden Schraubenfeder (111) angeordnet sind.

15. Vorderaufhängungs- und Lenkvorrichtung für ein Rad nach einem der Ansprüche 1 und 4 bis 11, insbesondere für das Vorderrad eines Motorrades, das von einem einseitig angeordneten Tragarm getragen wird, dessen oberes Ende mit einem Aufhängungs- bzw. Dämpfungsblock verbunden ist, welcher eine äussere bewegliche Stange besitzt, deren Ende an einen vorderen Schnabel des Motorradrahmens angelenkt ist, dadurch gekennzeichnet, dass sie eine Lenkstange (121) (bzw. Lenkrad) aufweist, die um eine senkrechte Achse des vorderen Schnabels drehbar angeordnet und um eine zur Mittenebene des Vorderrads (d.h. zur Lenkebene) im wesentlichen senkrechten Achse (123) drehbar an das obere Ende wenigstens eines oberen Schwingarmes (122) angelenkt ist, der von seinem oberen Ende aus zur Vorderseite des Motorrades geneigt und dessen unteres Ende ebenfalls um eine zur Lenkebene im wesentlichen senkrechte Achse (127) drehbar an das obere Ende wenigstens eines unteren Schwingarmes (129) angelenkt ist, welcher von seinem unteren Ende aus zur Vorderseite des Motorrades geneigt ist, wobei dieses untere Ende des unteren Schwingarms um eine zur Lenkebene im wesentlichen senkrechte Achse (130) drehbar mit dem einseitig angeordneten Tragarm (103) verbunden ist, derart, dass die einerseits mit der Lenkstange (121) und andererseits mit dem Tragarm (103) schwenkbar verbundenen Schwingarme (122, 129) während der Ausschlagbewegungen der Vorderaufhängung (108, 111) des Motorrads scherenartig miteinander zusammenwirken, und ferner dadurch gekennzeichnet, dass die Dreh- bzw. Schwenkverbindung (123) des oberen Endes des oberen Schwingarmes (122) und diejenige (130) des unteren Endes des unteren Schwingarmes (129) jenseits der Abstützflächen (114, 117) der Enden der die Aufhängungsfeder des Aufhängungsblocks (108) bildenden Schraubenfeder (111) angeordnet sind.

16. Vorrichtung nach Anspruch 15, dadurch gekennzeichnet, dass der obere Schwingarm (122) und der untere Schwingarm (129) im wesentlichen gleich lang ist, und dass ihre Mittellinien bei Maximalausschlag des Aufhängungsblockes mit der Längsachse (133) des Aufhängungsblockes einen Winkel (a) von etwa 30° bilden.

17. Vorrichtung nach Anspruch 15, dadurch gekennzeichnet, dass der obere Schwingarm (122) und der untere Schwingarm (129) im wesentlichen verschieden lang sind, und dass ihre Mittellinien bei Maximalausschlag des Aufhängungsblocks (108) mit der Längsachse (133) des Aufhängungsblockes einen Winkel (a) von weniger als 30° bilden.

18. Vorrichtung nach Anspruch 14, dadurch gekennzeichnet, dass der obere Schwingarm (122) wesentlich kürzer ist, als der untere Schwingarm (129), sodass sich die Achse (127) des Gelenkes zwischen beiden Schwingarmen vom Vorderrad entfernt.

19. Vorrichtung nach einem der Ansprüche 15 bis 18, dadurch gekennzeichnet, dass die Schwenkachse (123) des oberen Schwingarmes (122) im wesentlichen koaxial zur Anlenkachse der äusseren beweglichen Stange (110) des Aufhängungs- und Dämpfungsblockes (108) am vorderen Schnabel (107) des Motorradrahmens (138) angeordnet ist.

20. Vorrichtung nach einem der Ansprüche 15 und 19, dadurch gekennzeichnet, dass der obere Schwingarm (122) an seinem oberen Ende einen zweiarmigen Bügel (122a, 122b) aufweist, wobei jeder der Bügelarme mit einem Ansatz (124a, 124b) eines Lenkstangenarmes (121) und an seinem unteren Ende mit einem einzigen Mittelager (126) verbunden ist, das von einer Montagestange durchdrungen wird und zwischen zwei ebenfalls von der Montagestange durchdrungenen Lagern (128a, 128b) angeordnet ist, welch letztere an je einem der Enden der beiden Arme eines Bügels des unteren Schwingarmes (129) angeordnet sind, wobei sich an den unteren Schwingarm zwei untere Arme (129a, 129b) anschliessen, deren jeder mit einem zugehörigen Ansatz (131, 132) des Tragarmes (103) drehbar verbunden ist.

21. Vorrichtung nach einem der Ansprüche 15 bis 20, dadurch gekennzeichnet, dass der obere und der untere Schwingarm (122, 129) trapezförmig ausgebildet sind, wobei die lange Basisseite des Trapezes einerseits an der Lenkstange und andererseits am Vorderrad-Tragarm (103) angelenkt ist, während die kurzen Basisseiten nebeneinander angeordnet und miteinander gelenkig verbunden sind.

22. Vorrichtung nach einem der Ansprüche 15 bis 21, dadurch gekennzeichnet, dass wenigstens eine der Auflageflächen der Enden der Schraubenfeder (111) einen Anschlag (114) mit geringer Reibung aufweist, der es der Feder (111) während des Ausschlages gestattet, sich frei um ihre Längsachse (133) zu drehen.

**Claims**

1. Front suspension device comprising a single lateral arm, for supporting and steering a motorcycle front wheel (13), the said arm (12) being adapted to turn about a steering or pivoting axis (64) substantially orthogonal to that of the said wheel (13) and located substantially in the median longitudinal plane of the motorcycle including, on the one hand, a "C"-shaped bent part (14) which encases a part of the cross section of the periphery (15, 16, 17) of the wheel (13) and, on the other hand, a lower part (39) carrying the axle (32) of the wheel (13) and which is provided with a ball and socket articulation (47, 42) the pivoting center (47) of which is located substantially in alignment with the steering axis (64) and which cooperates with an associated ball and socket articulation piece (47) mounted at the end of a connecting arm (44) which is in turn rotatively mounted on an axis (48) of the chassis of the motorcycle perpendicularly to the median plane (43) of the motorcycle, in order to guide the lateral arm laterally, characterized in that said lateral arm (12) is connected at its upper end to a suspension and shock absorbing block (21, 22) having a telescopic cylinder structure (20) the outer movable rod (23) of which, on the one hand, is hinged at its end to a front nose (11) of the motorcycle chassis (8, 9, 10) and, on the other hand, has a geometrical axis which substantially merges with the pivoting axis (64) of the arm (12), such that said single lateral arm (12) carrying the front wheel (13) is connected to the chassis (8, 9, 10) of the motorcycle solely by the piston rod (23) and by the lower connecting arm (44) which constitutes a triangulated suspension link integrating said lateral arm into the side of the triangle the length of which varies as a function of the load applied to the suspension and that the steering rotation of the single lateral arm (12) under the action of a steering control component (connecting link 51, handlebar 60) causes rotation of the suspension and shock absorbing block structure (20) with respect to said piston rod (23) and to the shock absorber piston (22) to which it is connected and, as a result therof, a damping action on rotation of the sterring of the motorcycle.

2. Device according to claim 1, characterized in that the C-shaped bent part (14) of the lateral arm (12) is connected by a ball and socket articulation (50, 51) to a steering link (51a) adapted to orientate the wheel (13) by rotation of the lateral arm (12) and of the suspension and shock absorbing block (21, 22) the movable rod (23) of which is integral in rotation with the front nose (11) of the chassis to which it transmits the friction couple exerted on the shock absorbing piston (22) by the structure (20) of said suspension and shock absorbing block.

3. Device according to claim 2, characterized in that the axis of rotation (63) of said steering link (51a) is disposed substantially at the center of curvature of the geometric path of travel of the center of the ball and socket joint (59, 51) when the spring/shock absorbing assembly (21, 22) is actuated.

4. Device according to claim 1, characterized in that the movable rod (23) of said telescopic bloc (20) is axially supported on the front nose (11) of the motorcycle chassis through which it extends while being free to rotate and axially movable inside the telescopic block (20) with which block it is integral in rotation, and in that the part of the said movable rod (23) which extends beyond the front nose (11) is rendered integral with a handlebar (60) with two handles for the direct steering control of the front wheel (13).

5. Device according to any one of claims 1 to 4, characterized in that the single lateral support arm (12) comprises adjacent to the axle (32) of the wheel an extension (53) directed towards the rim (15) of the wheel and the telescopic block (20) and on which is fixed by appropriate means, such as screws, at least one brake disk yoke (54) surrounding a brake disk (35) integral at least in rotation with the rotating axle (32) of the wheel (13).

6. Device according to any one of claims 1 to 5, characterized in that the axle (32) of the wheel is rotatively mounted inside the lateral arm (12) through the intermediary of at least one bearing (33, 34) axially immobilized by stop means in a bore (31) of the lateral arm (12) and protruding from the side opposite the lateral arm, by means of a grooved or similar attachment part (32a) adapted to be rendered detachingly integral in rotation with the brake disk (35) and the disk (37) of the front wheel (13), this attachment part being extended by a threaded receiving part (32b) of a rapid tightening nut (38) of the wheel and of the brake disk, so as to allow rapid changing of the front wheel and possibly of the brake disk (35) after shifting of the disk brake yoke(s).

7. Device according to claim 5, characterized in that the ball and socket articulation support which cooperates with the connecting arm (44) is constituted by a rod (41) integral with the lateral arm (12) and protruding in the direction of the travelling path of the front wheel (13) with its axle placed substantially in the median plane (43) of the front wheel, a ball or socket part (42) being disposed on this rod (41) and articulated on the associated end (47) of the connecting arm (44), and in that at least the rod (41) and a ball or socket part (42) of the associated end (47) of the connecting arm (44) are housed inside the cup (35c) of the brake disk (35).

8. Device according to any one of claim 1 to 7, characterized in that the external movable rod (110) of the telescopic cylinder (108) is hinged on the front nose (107) of the chassis of the motorcycle through the intermediary of a rod (112) of which the axis is orthogonal to the median plane of the motorcycle and which is integral with the front nose (107), said rod extending in a rotatable manner through a bore of an articulation head connected possibly, in an adjustable manner, to the movable rod (110).

9. Device according to any one of claims 1 to 6, characterized in that the associated ball and socket articulation piece (47) is mounted adjustably at the end of the connecting arm (44) so as to allow adjustment of the "rake" ($\alpha$) of the front wheel (13) of the motorcycle.

10. Device according to claim 9, characterized in that the adjustable connection between the end of the connecting arm (44) and the associated ball and socket articulation piece (47) is a sliding or movable connection controlled by an actuating jack servo-controlled by the speed of the motorcycle, so as to vary the rake ($\alpha$) of the front wheel (13) as a function of the speed of the motorcycle.

11. Device according to any one of claims 1 to 10, characterized in that the suspension and shock absorbing block (20, 21, 22) comprises a helical spring (21) having a generally cylindrical or frustoconical form and of which the longitudinal axis, while being substantially located in the median plane (43) of the motorcycle is off-centered with respect to the axis of the telescopic cylinder (20), due to the off-centering with respect to the said axis of at least one of the cups or plates (26, 30) receiving the end of said spring (21), so as to apply on the lateral arm (12) a return torque towards the straight line position.

12. Front suspension device comprising a single lateral arm, for supporting and steering a wheel, especially for a motorcycle front wheel carried by said lateral arm being connected at its upper end to a suspension and/or shock absorber block the external movable rod of which is rotationally connected at its upper end to a front nose of the chassis of the motorcycle, according to any of claims 1 and 4 to 11, characterized in that the spring of the suspension and/or shock absorber block (108) is a helical spring (111) of which at least one of the bearing planes of the ends comprises a low friction abutment (114) authorizing the spring (111) during its displacements to rotate freely about its longitudinal axis.

13. Device according to claim 12, characterized in that steering control means comprise a handlebar (121) or steering wheel rotatively mounted on a vertical axis of the said front nose (107) and rotationally mounted on an axis (123) substantially perpendicular to the median plane of the front wheel (steering plane), at the upper end of at least one upper link (122) inclined towards the front of the motorcycle from its upper end and of which the lower end is also rotationally mounted about an axis (127) substantially perpendicular to the said steering plane, at the upper end of at least one lower link (129) inclined towards the front of the motorcycle from its lower end which is rotationally connected to said lateral arm (103) about an axis (130) substantially perpendicular to the said steering plane, so that the upper and lower links (122, 129) rotationally connected to the handlebar (121) and to the lateral arm (103), respectively are pivotally connected scissor-wise to each other during the displacements of the front wheel suspension of the motorcycle.

14. Device according to claim 13, characterized in that the rotational connection (123) of the upper end of the upper link (122) and that (130) of the lower end of the lower link (129) are located beyond the bearing planes (114, 117) of the ends of said helical suspension spring (111) of the suspension block (108).

15. Front suspension device comprising a single lateral arm, for supporting and steering a wheel according to at least one of the claims 1 and 4 to 12, especially for a motorcycle front wheel carried by at least one support arm connected at its upper end to a suspension and/or shock absorber block the external movable rod of which is pivotally connected at its end to a front nose of the chassis of the motorcycle, characterized in that it comprises a handlebar (121) or steering wheel rotatively mounted on a vertical axis of the said nose (107) and rotationally mounted around an axis (123) substantially perpendicular to the median plane of the front wheel, i.e. to the sterring plane, at the upper end of at least one upper link (122) inclined towards the front of the motorcycle from its upper end and having its lower end also pivotally connected so as to rotate about an axis (127) substantially perpendicular to the said steering plane, at the upper end of at least one lower link (129) inclined towards the front of the motorcycle from its lower end which is rotatively connected to the support arm (103) about an axis (130) substantially perpendicular to the steering plane, so that the upper and lower links (122, 129), connected in rotation respectively to the handlebar (121) and to the support arm (103) are pivotally connected scissorwise to each other during the displacements of the front suspension of the motorcycle, and in that the rotational connection (123) of the upper end of the upper link (122) and that (130) of the lower end of the lower link (129) being located beyond the bearing planes (114, 117) of the ends of the helical spring (111) constituting the suspension spring of the suspension block (108).

16. Device according to claim 15, characterized in that the upper link (122) and the lower link (129) have substantially the same length and in that respective median lines form, in the maximum extension position of the suspension block, an angle ($\alpha$) of about 30° with the longitudinal axis (133) of said suspension block.

17. Device according to claim 15, characterized in that the upper link (122) and the lower link (129) have substantially different lengths, and in that their respective median lines form in the position of maximum extension of the suspension block (108) an angle ($\alpha$) smaller than 30° with the longitudinal axis (133) of said suspension block.

18. Device according to claim 17, characterized in that the upper link (122) has a length substantially smaller than that of the lower link (129) so as to increase the distance between the front wheel (101) and the axis of articulation (127) interconnecting said two links.

19. Device according to any one of claims 15 to 18, characterized in that the axis of articulation (123) of the upper link (122) is substantially coaxial to the axis of articulation connecting the external movable rod (110) of the suspension and shock absorber block (108) to said front nose (107) of the chassis (138) of the motorcycle.

20. Device according to any one of claims 15 and 19, characterized in that the upper part of the upper link (122) has a fork with two legs (122a, 122b) each of which is connected in rotation to a boss (124a, 124b) of a handlebar arm (121) which to lower parts of said legs are connected to a single central bearing (126) through which extends an assembling pin (127) and which is disposed between two bearings (128a, 128b) that are also crossed through by the assembling pin and which are provided at each of the ends of the two legs of a fork of the lower link (129) which is extended by two lower legs (129a, 129b) each connected in rotation to a corresponding boss (131, 132) provided on the support arm.

21. Device according to any one of claims 15 to 20, characterized in that the upper and lower links (122, 129) present the general form of a trapezium of which the large base is pivotally connected to the handlebar (121) and to the support arm (103) of the front wheel and of which the small bases are joined together and pivotally connected to each other.

22. Device according to any one of claims 15 to 21, characterized in that at least one of the bearing planes of the ends of the helical spring (111) comprises a low friction abutment (114) authorizing the spring (111) during its displacements to rotate freely about its longitudinal axis (133).

15

FIG.1

FIG.2

# FIG.3

EP 0 238 768 B1

FIG.4

FIG.5

FIG.6